Europäisches Patentamt

European Patent Office

Office européen des brevets

(11) Publication number: **0 119 725**
**B1**

(12) **EUROPEAN PATENT SPECIFICATION**

(45) Date of publication of patent specification: **20.04.88**

(51) Int. Cl.⁴: **B 32 B 31/28, B 32 B 27/08**

(21) Application number: **84300907.7**

(22) Date of filing: **13.02.84**

(54) Laminates with improved adhesion.

(30) Priority: **14.02.83 US 466266**

(43) Date of publication of application:
**26.09.84 Bulletin 84/39**

(45) Publication of the grant of the patent:
**20.04.88 Bulletin 88/16**

(84) Designated Contracting States:
**AT BE CH DE FR GB IT LI NL SE**

(56) References cited:
**FR-A-1 542 084**
**GB-A-1 522 397**
**US-A-3 188 266**

(73) Proprietor: **RAYCHEM CORPORATION (a California corporation)**
**300 Constitution Drive**
**Menlo Park California 94025 (US)**

(72) Inventor: **Vogdes, Christine Ellen**
**918 Adams Street, No. 2**
**Albany California 94706 (US)**
Inventor: **Kawazoye, Yutaka**
**711 Raymundo Avenue**
**Los Altos California 94922 (US)**

(74) Representative: **Jay, Anthony William et al**
**Raychem Limited Intellectual Property Law Department Faraday Road**
**Dorcan Swindon Wiltshire (GB)**

Courier Press, Leamington Spa, England.

# 0 119 725

**Description**

In the production of polymeric shaped articles, e.g. heat-shrinkable articles, such as tubing and molded parts, there is almost always a compromise required between desired properties and price, and frequently between different desired properties. For example, products made from polyethylene or similar polymers (e.g. ethylene/vinyl acetate and ethylene/ethyl acrylate copolymers) are of low cost and have good low temperature flexibility, but they have moderate solvent resistance at room temperature and poor solvent resistance at elevated temperature, and are not suitable for use at temperatures above about 135°C. Products based on polar polymers blended with elastomers can show good resistance to polar solvents and good heat aging properties as compared to polyethylene, and are moderately priced. Products comprising mainly fluoropolymers (e.g. blends of Viton® with polyvinylidene fluoride) have better solvent resistance and heat aging, and are flexible at room temperature; but they have very poor flexibility at low temperature, e.g. at −55°C, and are very expensive. Polyvinylidene fluoride itself (and similar thermoplastic fluoropolymers) is stiff even at room temperature, but has excellent solvent resistance and heat aging properties. Each of the polymers has high dielectric strength, provided it is sufficiently thick.

Laminates, i.e. multi-layer products, in which one layer provides some desired properties and another layer provides complementary properties, can in principle offer a satisfactory compromise. However, it is not satisfactory merely to have two (or more) layers which are not somehow bonded together, as they may move with respect to one another and the less flexible material buckle and crack, for example. Thus it is desirable to bond the layers, forming a laminate structure. Adhesion between the layers is, however, the problem. Similar materials, e.g. polyethylene and ethylene/vinyl acetate, may be readily melt-bonded. U.V. Radiation of polyethylene/polyester laminates is described in U.S. Patent 3188266. However fluoropolymers, such as polyvinylidene fluoride, which are especially valuable in layered products for their mechanical strength, are notably poor in adhesion to virtually any other polymers. The layers may alternatively be adhered together with a "tie-layer" of a third polymer to which they have good adhesion, but such adhesive polymers have generally poorer properties than either of the layers they bond, thereby reducing the overall value of the composite.

It is thus desirable to develop laminate structures with improved inter-layer adhesion; and, in particular, to develop structures having both low-temperature flexibility and solvent and heat resistance.

It is particularly desirable to develop laminates having sufficient inter-layer adhesion that they may be rendered heat-shrinkable and later heat-shrunk without disbonding or substantial weakening of the inter-layer bond.

We have discovered that it is possible to enhance the bonding between dissimilar polymeric laminae in a laminate structure by irradiating the laminate, and to further enhance that bonding by annealing the irradiated laminate. The technique also produces laminates with a high degree of mechanical integrity even on exposure to solvents or elevated temperatures. The laminates can be in the form of heat-recoverable articles.

The invention provides a method of preparing a laminate comprising a first layer composed of a first radiation-cross-linkable polymeric composition which first composition comprises at least one fluoropolymer and an adherent second layer composed of a second polymeric composition which is incompatible with the first polymeric composition, which method comprises:

(1) preparing a laminate comprising a layer of the first composition and an adjacent layer of the second composition by a process in which the interface between the layers is heated to a temperature which is higher than the melting point of at least one of the polymers in at least one of the compositions; and

(2) irradiating the laminate prepared in step (1) with ionising radiation.

Preferably the process includes a further step in which the irradiated laminate is heat-treated, preferably at a temperature which is above the melting point of at least one of the polymers in at least one of the compositions.

For the purposes of the present invention, polymeric compositions are regarded as incompatible if a laminate of the two compositions, made by the process described in connection with Example 1 below (without the radiation or annealing steps) has a peel strength of less than 8.8 N/cm (5 pli), the invention being especially valuable when the peel strength is less than 5.3 N/cm (3 pli), e.g. less than 3.5 N/cm (2 pli), particularly less than 2.6 N/cm (1.5 pli). Peel strengths given in this specification are measured at room temperature by the method described in the Examples.

The excellent results provided by the present invention are believed to result at least in part from chemical cross-linking across the interface between the layers; it is therefore essential that each of the polymeric compositions be radiation cross-linkable. Known radiation cross-linking agents are preferably included in the compositions to assist in making them radiation cross-linkable. Subject to this limitation, this invention makes it possible to combine the desirable properties (e.g. low cost, physical, chemical or electrical properties) of incompatible polymeric compositions, in a way which has hitherto been regarded as quite impossible preferably both compositions are electrically insulating.

The laminates are particularly useful in the form of heat-recoverable articles, e.g. heat-shrinkable tubes.

Suitable jacketing or high strength materials for one of the laminae include fluoropolymers such as polyvinylidene fluoride, chlorotrifluoroethylene, ethylene/tetrafluoroethylene copolymer,

2

ethylene/chlorotrifluoroethylene copolymer, vinylidene fluoride/hexafluoropropylene copolymer, etc.; polyamides such as nylon 12; and high density polyethylene (HDPE). Particularly preferred are fluoropolymers.

These materials may contain elastomers or low modulus thermoplastics to make the high modulus materials above more flexible. Typical elastomers suitable for addition to e.g. polyvinylidene fluoride would include vinylidene fluoride/hexafluoropropylene copolymer, tetrafluoroethylene/propylene copolymer, acrylic resins, etc. In fact, few elastomers are suitable for a given high modulus material because they are likely to detract considerably from its performance. Elastomers could typically be added at 5—50% by weight, especially 5—30% by weight of the composition.

Typical inner layer or low strength-high flexibility materials for the other lamina include elastomers such as chlorinated polyethylene; neoprene; Hytrel® (duPont) (a block polyester copolymer) and other polyesters; ethylene/vinyl acetate, ethylene/ethyl acrylate, and terpolymers such as Vamac® (duPont); polyamide elastomers; and blends of the above with each other and e.g. fluoroelastomers such as polyvinylidene fluoride/hexafluoropropylene.

The polymeric compositions used in the two layers can include additives such as antioxidants, acid acceptors and other stabilizers; colorants; flame retardants (not normally required for fluoropolymers, but often necessary for nylons and polyethylene; inert fillers, e.g. calcium carbonate; plasticizers, e.g. diallyl phthalate (especially if no elastomers are added); processing aids; and compounds which enhance the crosslinking of the polymer on irradiation.

For many applications, it is desirable that polymeric products be resistant to solvents. Immersing laminated articles in a solvent which swells one or both of the layers places a stress on the bond line between them and may result in delamination of layers which have high bond strengths before immersion. As shown by the Examples below, this invention can be used to produce laminates having excellent solvent resistance.

We have found that it is important to use a sufficiently high temperature in the formation of the laminate. Preferably the interface is heated to a temperature which is higher than the melting point of at least one of the polymers in each of the compositions. Coextrusion of the two compositions is a preferred method of preparing the laminates.

The conditions in the radiation and heat-treatment steps should be selected to obtain a suitable increase, preferably at least a two-fold increase, in the peel strength of the laminate. Radiation dosages in the range 2.0 to 15.0 Mrads are usually satisfactory, e.g. 5 to 10.0 Mrads, depending on the polymeric composition and any radiation cross-linking agent therein. Radiation at room temperature is preferred.

We have found that heat-treatment of the irradiated laminate results in substantial increases in bond strength. Preferably the laminate is annealed at a temperature higher than the melting point of at least one, and preferably all, of the polymers in each of the compositions. Annealing can be combined with a high temperature deformation step used to convert the laminate into a heat-recoverable article. Annealing times of up to 10 minutes are generally satisfactory. In another embodiment, the irradiated laminate is heat-treated for an extended time, e.g. at least 12 hours preferably at least 24 hours, at an elevated temperature which is below the melting point of any polymer which is present in significant amount in either the first or the second polymeric composition, preferably at a temperature of at least 100°C, e.g. 125—175°C.

Examples

The invention is illustrated in the following Examples, which are summarized in the Table below. In each of the Examples, a laminate was made from a first composition A and a second composition B. In Examples 1, 4—17, 24—27, 29, 32 and 33, the laminates were in the form of slabs which were prepared as follows. A slab of the lower modulus material (Composition A) was pressed at 210°C in a 15×15 cm (6×6 inch), 0.95 or 1.1 mm (37 or 45 mil) frame, using maximum ram force of about 178 kN (40,000 lb). A slab of the higher modulus material (composition B) was pressed at 210°C in a 15×15 cm (6×6 inch) 0.25 mm (10 mil) frame, using maximum ram force of about 178 kN (40,000 lb). A 2.5 cm (1 inch) wide foil strip was placed on a marginal portion of the top surface of the thicker slab (to provide a starting point for the subsequent peel test). The thin slab was then placed on top and the two slabs laminated together in a 15×15 cm (6×6 inch) 0.95 or 1.1 mm (37 or 45 mil) frame, at 210°C, the ram pressure being 22.2 kN (5,000 lb) for 1 min., 44.5 kN (10,000 lb) for 1 min., and 40 kN (20,000 lb) for 1 min. Pressure was released, and the laminate was removed and placed in a cold water press under a pressure of 111.2 kN (25,000 lb) for 1 minute. In Examples 18 to 23, the same procedure was followed except that Composition A was pressed in a 0.4 mm (15 mil) frame and Composition B was pressed in 0.25 mm (10 mil) frame. In a few of the Examples, as indicated by the notation "(+5MR)" in the Tables, the slabs were irradiated before they were laminated. In Examples 2, 3, 28, 30 and 31, the laminate was in the form of tubing prepared by coextruding a first composition A to form an inner layer of thickness about 0.65 mm (25 mil) and a second composition B to form an outer layer of thickness about 0.13 mm (5 mil). The internal diameter of the tubing about 5.7 mm (0.225 inch).

In each of the Examples, strips 15×0.65 cm (6×0.25 inch) were cut from the laminates. Where indicated in the Tables below, the strips were irradiated and/or annealed. In most cases, annealing was effected immediately after irradiation, but as shown by the peel strengths in Example 2 marked *, measured on samples which were annealed after sufficient time had elapsed for free radicals to decay, a delay between irradiation and annealing is not significant. In Examples 28—31, some of the strips were soaked in methylethylketone (MEK) for sufficient time to give the indicated percentage increase in weight, or were exposed to gasoline for the indicated time; bond strengths were measured after the solvent had evaporated for 24 hours. The bond strength between the two layers was then determined on a standard Instron at a peel rate of 5.1 cm (2 inch) per mimute. As those skilled in the art will realise, it is difficult to obtain consistent results in the measurement of peel strengths, particularly at low peel strengths. In addition, it should be pointed out that the peel strengths of the tubular laminates are not comparable with the peel strengths of the slab laminates.

The various compositions used in the Examples are identified below.

Compositions A
- A1 Ionomer
- A3 EPDM elastomer
- A4 Low density polyethylene
- A5 Low density polyethylene containing a radiation cross-linking agent
- A6 Blend of a fluoroelastomer and a thermoplastic elastomer containing stabilizers, flame retardants, and a radiation cross-linking agent
- A7 Same as A6, but without the cross-linking agent
- A8 Ethylene/vinyl acetate copolymer containing stabilizers, and a radiation cross-linking agent
- A9 Ethylene/vinyl acetate copolymer containing stabilizers, flame-retardants and a radiation cross-linking agent
- A10 Ethylene/ethyl acrylate copolymer containing stabilizers, flame-retardants and a radiation cross-linking agent
- A11 Thermoplastic elastomer containing stabilizers, flame retardants and a radiation cross-linking agent

Compositions B
- B1 Polyvinylidene fluoride containing stabilizers, plasticiser and radiation cross-linking agent
- B2 High density polyethylene
- B3 Polyvinylidene fluoride
- B4 Polyvinylidene fluoride containing a radiation cross-linking agent
- B5 A blend of polyvinylidene fluoride and a fluoroelastomer containing a radiation cross-linking agent
- B6 High density polyethylene containing a radiation cross-linking agent
- B7 Nylon-12
- B8 A blend of polyvinylidene fluoride and an acrylic elastomer containing stabilizers and a radiation cross-linking agent
- B9 A blend of polyvinylidene fluoride and an ionomer containing stabilisers
- B10 Ethylene/vinyl acetate copolymer
- B11 Polyvinylidene fluoride containing a radiation cross-linking agent
- B12 Nylon 12 containing a radiation cross-linking agent
- B13 Ionomer
- B14 Ionomer containing a radiation cross-linking agent

TABLE A

| Ex No. | A | B | Dose | Bond strength in N/cm (pli) after annealing (Mins/°C) | | | | | | |
| --- | --- | --- | --- | --- | --- | --- | --- | --- | --- | --- |
| | | | | None | 5/100 | 5/150 | 5/175 | 5/200 | 5/225 | 240/175 |
| 1 | 6 | 1 | 0 | 3.7 (2.1) | — | — | — | — | 2.8 (1.6) | — |
| | | | 5.0 | 7.4 (4.2) | — | — | 11.9 (6.8) | — | 12.1 (6.9) | — |
| | | | 10.0 | 9.1 (5.2) | | | 11.4 (6.5) | | 14.7 (8.4) | |
| 2 | 6 | 1 | 0 | 9.8 (5.6) | — | 5.4 (3.1) | — | — | — | — |
| (Tubing) | | | 5 | 13.0 (7.4) | 8.4 (4.8) | 12.2 (6.4) | 22.2 (12.7) 21.0 (12.0)* | 23.6 (13.5) | 33.3 (19.0) | 33.1 (18.9) |
| | | | 10 | 14.4 (8.2) | 12.3 (7.0) | 13.3 (7.6) | 23.1 (13.2) 20.8 (11.9)* | 29.9 (13.1) | — | — |
| | | | 15 | 12.8 (7.3) | 10.7 (6.1) | 12.6 (7.2) | 22.6 (12.9) 21.0 (12.0)* | 24.2 (13.8) | — | — |
| 3 | 6 | 2 | 0 | 4.4 (2.5) | — | — | — | — | — | — |
| (Tubing) | | | 10 | 8.6 (4.9) | 7.2 (4.1) | 9.5 (5.4) | 10.2 (5.8) | — | — | — |

**0 119 725**

TABLE B

| Ex No. | A | B | Dose (MR) | Bond strength in N/cm (pli) after annealing | |
| | | | | None | 10 min/225°C |
|---|---|---|---|---|---|
| 4 | 6 | 3 | 0 | 1.6 (0.9) | 11.2 (6.4) |
| | | | 5 | 5.1 (2.9) | 11.4 (6.5) |
| | | | 10 | 3.7 (2.1) | |
| 5 | 6 | 4 | 0 | ·1.1 (0.6) | — |
| | | | 5 | 0.7 (0.4) | 4.7 (2.7) |
| | | | 10 | 5.4 (3.1) | 10.9 (6.2) |
| 6 | 6 | 1 | 0 | 0.9 (0.5) | — |
| | | | 5 | 5.6 (3.2) | 11.4 (6.5) |
| | | | 10 | 2.5 (1.4) | 6.5 (3.7) |
| 7 | 6 | 5 | 0 | 1.1 (0.6) | — |
| | | | 5 | 0.7 (0.4) | 1.9 (1.1) |
| | | | 10 | 7.2 (4.1) | 0.5 (1.7) |
| 8 | 6 | 2 | 0 | 1.8 (1.0) | — |
| | | | 5 | 22.4 (12.8) | 32.7 (18.7) |
| | | | 10 | 19.1 (10.9) | 27.8 (15.9) |
| 9 | 6 | 6 | 0 | 1.3 (0.7) | — |
| | | | 5 | 16.3 (9.3) | 29.6 (16.9) |
| | | | 10 | 11.4 (6.5) | 19.4 (11.1) |
| 10 | 7 | 3 | 0 | 0 | — |
| | | | 5 | 0.4 (0.2) | 0.9 (0.5) |
| 11 | 8 | 1 | 0 | 0 | — |
| | | | 5 | 1.8 (1.0) | 3.5 (2.0) |
| | | | 10 | 1.4 (0.8) | 3.2 (1.8) |
| 12 | 9 | 1 | 0 | 0 | — |
| | | | 10 | 1.4 (0.8) | 3.2 (1.8) |
| 13 | 10 | 1 | 0 | 0 | — |
| | | | 10 | 1.4 (0.8) | 7.4 (4.2) |
| 14 | 10 | 8 | 0 | 0 | — |
| | | | 5 | 8.6 (4.9) | 8.2 (4.7) |

6

TABLE B (cont)

| Ex No. | A | B | Dose (MR) | Bond strength N/cm (pli) after annealing | |
| --- | --- | --- | --- | --- | --- |
| | | | | None | 10 min/225°C |
| 15 | 10 | 9 | 0 | 0.2 (0.1) | — |
| | | | 5 | 3.7 (2.1) | 7.2 (4.1) |
| 16 | 1 | 1 | 0 | 0 | — |
| | | | 5 | 0.4 (0.2) | 0.2 (1.0) |
| | | | 10 | 0 | 1.4 (0.8) |
| 17 | 3 | 1 | 0 | 0 | — |
| | | | 5 | 3.0 (1.7) | 9.5 (5.4) |
| | | | 10 | 6.8 (3.9) | 10.5 (6.0) |
| 18 | 4 | 3 | 0 | 0 | — |
| | | | 5 | 0 | 0 |
| 19 | 5 | 3 | 0 | 0 | — |
| | | | 5 | 0 | 0 |
| 20 | 4 | 1 | 0 | 0 | — |
| | | | 5 | 0 | 0 |
| 21 | 5 | 1 | 0 | 0 | — |
| | | | 5 | 0 | 0 |
| 22 | 4 | 11 | 0 | 7.0 (4.0) | — |
| | | | 5 | 8.9 (5.1) | >24.5 (14) |
| 23 | 5 | 11 | 0 | 5.3 (3.0) | — |
| | | | 5 | 13.3 (7.6) | 13.3 (7.6) |
| 24 | 6 | 1 | 0 | 6.3 (3.6) | 3.9 (2.2) |
| | | | 5 | 11.4 (6.5) | 13.0 (7.4) |
| 25 | 6 (+5MR) | 1 | 0 | 6.5 (3.7) | 2.8 (1.6) |
| | | | 5 | 7.7 (4.4) | 7.9 (4.5) |
| 26 | 6 | 1 (+5MR) | 0 | 14.9 (8.5) | 8.9 (5.1) |
| | | | 5 | 16.5 (9.4) | 17.0 (9.7) |
| 27 | 6 (+5MR) | 1 (+5MR) | 0 | 15.2 (8.7) | 10.0 (5.7) |
| | | | 5 | 16.6 (9.5) | 16.5 (9.4) |

**0 119 725**

TABLE C

| Ex No. | A | B | Dose (MR) | Bond strength N/cm (pli) after annealing | | | |
|---|---|---|---|---|---|---|---|
| | | | | None | 10 min/225°C and solvent exposure | | |
| 28 | 6 | 1 | 0 | 9.8 (5.6) | — | 0 | (33% MEK) |
| (Tubing) | | | 5 | 13.0 (7.4) | — | 8.6 (4.9) | (41% MEK) |
| | | | 5 | — | 33.3 (19) | 15.6 (8.9) | (45% MEK) |
| 29 | 6 (+5MR) | 1 (+5MR) | 0 | 7.4 (4.2) | — | 0 | (40% MEK) |
| 30 | 6 | 1 | 5 | 13.0 (7.4) | — | 4.0 (2.3) | (24 hrs to gasoline) |
| (Tubing) | | | | | | 2.5 (1.4) | (72 hrs to gasoline) |
| | | | | | | 3.5 (2.0) | (7 days to gasoline) |
| 31 | 6 | 1 | 5 | — | 23.6 (13.5) | 11.9 (6.8) | (24 hrs to gasoline) |
| (Tubing) | | | | | | 13.0 (7.4) | (24 hrs to gasoline) |
| | | | | | | 12.3 (7.0) | (7 days to gasoline) |
| 32 | 11 | 1 | 0 | 0.9 (0.5) | 0.9 (0.5) | | |
| | | | | 1.9 (1.1) | 6.1 (3.5) | | |
| 33 | 6 | 1 | 5 | 2.1 (1.2) | 1 day/150°C 7.4 (4.2) | 3 days/150°C 10.3 (5.9) | 5 days/150°C 13.7 (7.8) |

## Claims

1. A method of preparing a laminate comprising a first layer composed of a first radiation-cross-linkable polymeric composition which first composition comprises at least one fluoropolymer and an adherent second layer composed of a second radiation-cross-linkable polymeric composition which is incompatible with the first polymeric composition, which method comprises

(1) preparing a laminate comprising a layer of the first composition and an adjacent layer of the second composition by a process in which the interface between the layers is heated to a temperature which is higher than the melting point of at least one of the polymers in at least one of the compositions; and

(2) irradiating the laminate prepared in step (1) with ionising radiation.

2. A method according to Claim 1 wherein in step (1), the interface is heated to a temperature which is higher than the melting point of at least one of the polymers in each of the compositions.

3. A method according to Claim 1 or 2 which comprises

(3) annealing the irradiated laminate at a temperature which is higher than the melting point of at least one of the polymers in at least one of the compositions.

4. A method according to Claim 3 wherein in step (3), the laminate is annealed at a temperature which is higher than the melting point of at least one of the polymers in each of the compositions.

5. A method according to any of the preceding claims, wherein the laminate is irradiated to a dose within the range from 2 to 15 Mrad.

6. A process according to any of the preceding claims wherein the first composition also contains an elastomer.

7. A process according to any of the preceding claims, wherein the first composition comprises polyvinylidene fluoride.

8. A process according to any of the preceding claims wherein the second composition comprises an elastomer.

9. A process according to any of the preceding claims which comprises deforming the irradiated laminate at a temperature which is higher than the melting point of at least one of the polymers in at least one of the compositions, and cooling the deformed laminate thereby preparing a heat-recoverable article.

8

# 0 119 725

## Patentansprüche

1. Verfahren zur Herstellung eines Laminats, umfassend eine erste Schicht, zusammengesetzt aus einer ersten strahlungsvernetzbaren polymeren Zusammensetzung, welche erste Zusammensetzung wenigstens ein Fluorpolymer umfaßt, und eine klebende zweite Schicht, zusammengesetzt aus einer zweiten strahlungsvernetzbaren polymeren Zusammensetzung, welche mit der ersten polymeren Zusammensetzung inkompatibel ist, welches Verfahren umfaßt:

(1) Herstellen eines Laminats, umfassend eine Schicht aus der ersten Zusammensetzung und eine angrenzende Schicht aus der zweiten Zusammensetzung, durch ein Verfahren, in welchem die Grenzfläche zwischen den Schichten auf eine Temperatur erhitzt wird, welche höher ist als der Schemlzpunkt von wenigstens einem der Polymeren in wenigstens einer der Zusammensetzungen; und

(2) Bestrahlen des in Schritt (1) hergestellten Laminats mit ionisierender Strahlung.

2. Verfahren nach Anspruch 1, worin in Schritt (1) die Grenzfläche auf eine Temperatur erhitzt wird, welche höher ist als der Schmelzpunkt von wenigstens einem der Polymeren in jeder der Zusammensetzungen.

3. Verfahren nach Anspruch 1 oder 2, welches umfaßt:

(3) Tempern des bestrahlten Laminats bei einer Temperatur, welche höher ist als der Schmelzpunkt von wenigstens einem der Polymeren in wenigstens einer der Zusammensetzungen.

4. Verfahren nach Anspruch 3, worin in Schritt (3) das Laminat bei einer Temperatur getempert wird, welche höher ist als der Schmelzpunkt von wenigstens einem der Polymeren in jeder der Zusammensetzungen.

5. Verfharen nach einem der vorstehenden Ansprüche, worin das Laminat bis zu einer Dosis innerhalb des Bereiches von 2 bis 15 Mrad bestrahlt wird.

6. Verfahren nach einem der vorstehenden Ansprüche, worin die erste Zusammensetzung auch ein Elastomer enthält.

7. Verfahren nach einem der vorstehenden Ansprüche, worin die erste Zusammensetzung Polyvinylidenfluorid umfaßt.

8. Verfahren nach einem der vorstehenden Ansprüche, worin die zweite Zusammensetzung ein Elastomer umfaßt.

9. Verfahren nach einem der vorstehenden Ansprüche, welches die Verformung des bestrahlten Laminats bei einer Temperatur, die höher ist als der Schmelzpunkt von wenigstens einem der Polymeren, in wenigstens einer der Zusammensetzungen und Abkühlen des deformierten Laminats unter Herstellung eines wärmerückstellbaren Teils umfaßt.

## Revendications

1. Procédé de fabrication d'un matériau stratifié comprenant une première couche composée d'une première composition polymère réticulable par irradiation, cette première composition comprenant au moins un polymère fluoré, et une deuxième couche adhésive composée d'une deuxième composition de polymère qui est incompatible avec la première composition polymère, suivant lequel:

(1) on prépare un matériau stratifié comprenant une couche de la première composition et une couche adjacente de la deuxième composition par un procédé dans lequel l'interface entre les couches est chauffée à une température qui est supérieure au point de fusion d'au moins un des polymères présents dans au moins une des compositions; et

(2) on irradie le matériau stratifié préparé dans l'étape (1) avec un rayonnement ionisant.

2. Procédé suivant la revendication 1, dans lequel, dans l'étape (1) l'interface est chauffée à une température qui est supérieure au point de fusion d'au moins un des polymères présents dans chacune des compositions.

3. Procédé suivant la revendication 1 ou 2, dans lequel:

(3) on recuit le matériau stratifié à une température qui est supérieure au point de fusion d'au moins un des polymères présents dans au moins une des compositions.

4. Procédé suivant la revendication 3, dans lequel, dans l'étape (3), le matériau stratifié est recuit à une température qui est supérieure au point de fusion d'au moins un des polymères présents dans chacune des compositions.

5. Procédé suivant l'une quelconque des revendications précédentes, dans lequel le matériau stratifié est irradié suivant une dose de 2 à 15 Mrads.

6. Procédé suivant l'une quelconque des revendications précédentes, dans lequel la première composition comprend également un élastomère.

7. Procédé suivant l'une quelconque des revendications précédentes, dans lequel la première composition comprend du fluorure de polyvinylidène.

8. Procédé suivant l'une quelconque des revendications précédentes, dans lequel la deuxième composition comprend un élastomère.

9. Procédé suivant l'une quelconque des revendications précédentes, dans lequel on déforme le matériau stratifié irradié à une température qui est supérieure au point de fusion d'au moins un des polymères présents dans au moins une des compositions, et dans lequel on refroidit le matériau stratifié déformé de façon à préparer ainsi un article récupérable à la chaleur.

9